# EUROPEAN PATENT SPECIFICATION

(11) **EP 3 981 706 B1**
(45) Date of publication and mention of the grant of the patent: **16.07.2025**
(21) Application number: 21200758.7
(22) Date of filing: 04.10.2021
(51) Int. Cl.: B65D 77/20

(54) **CONTAINER FOR FOOD PACKAGING**
BEHÄLTNIS ZUR LEBENSMITTELVERPACKUNG
CONTENEUR D'EMBALLAGE ALIMENTAIRE

(30) Priority: 06.10.2020 IT 202000023464
(43) Date of publication of application: 13.04.2022
(73) Proprietor: SIRAP FRANCE S.A.S., 13550 Noves (FR)
(72) Inventor: TIRELLI, Simone, 26015 Soresina (CR) (IT); BOSIO, Luca, 26010 Robecco D'Oglio (CR) (IT)
(74) Representative: Long, Giorgio

(56) References cited:
- EP-A1- 1 681 245
- EP-A1- 3 683 168
- WO-A1-2012/069050
- WO-A1-2016/071685
- WO-A2-2011/083342
- JP-A- H0 891 437

## Description

### Field of application

According to its more general aspect, the present invention relates to containers suitable for the packaging of products of various types, preferably but not exclusively food products.

In particular, the present invention relates to a container made of plastic material suitable for the packaging of food products, in which the plastic material comprises preferably, but not exclusively, PET and/or a biodegradable polymer, or of paper material, such as cardboard, paperboard and the like, and a method for the production of this container.

The present invention also relates to a method for the production of a package comprising a container as described above and a closing lid applied, preferably in a sealed manner, on the perimetral edge of said container.

### Prior art

It is well known in the food industry to package food products in sealed packages made of plastic material. These packages typically consist of a container, usually in the form of a tray, and a closing lid (usually in the form of film) sealed on the perimetral edge of the container, so as to protect the food product contained inside the container.

Frequently, the container and the respective film or closing lid are made of polyethylene terephthalate (PET), usually amorphous PET (APET). This material is preferred owing to its features which make it particularly suitable for the conservation of food products, such as high transparency and greater permeability to oxygen than other plastic materials conventionally used for the manufacture of containers, such as polystyrene (PS) and polypropylene (PP). Furthermore, PET is easily recyclable in the production process of containers both from post-consumer origin (usually PET bottles) and from production scraps (or waste) deriving from the thermoforming of the containers.

In order to have an adequate tight sealing between containers and respective closing lids made of PET, it is known to apply a layer of a heat-activatable adhesive to the sealing edge of the container before sealing the closing lid. The adhesive is applied along the entire sealing edge by roller coating, spray coating or the like and the sealing is carried out by compressing the closing lid on the sealing edge of the container and by simultaneously heating said sealing edge to activate (melt) the adhesive. Solutions of this type are disclosed for instance in patent applications WO 2011/083342, WO 2012/069050, and WO 2016/071685. This allows avoiding the use of multilayer materials comprising a PET layer and a sealing layer of another polymer, for instance PP, PS or more typically PE, which contaminate PET thus compromising the recyclability thereof in the container production process, the perfect transparency, and the optical features (in particular haze and clarity) thereof.

Although the solution of interposing an adhesive between the edge of the container and the closing film allows a higher rate of recyclability of the production waste of the containers, this is not free from drawbacks that need to be solved. In fact, it should be noticed that with the above-mentioned coating techniques it is rather complicated to apply the adhesive layer on the sealing edge without minimally affecting the internal side walls of the containers, so that if adhesive is present even only minimally on said internal side walls there is the real possibility of contaminating the food product in the packages obtained from said containers, for instance during the handling, transport and/or storage of the packages. Furthermore, since in the above-mentioned solution of the prior art the adhesive substantially covers the entire perimetral edge of the container, there is also the real possibility that the melted adhesive during the heat-sealing process of the closing lid may partially protrude towards the inside of the container, thus making, even in this eventuality, the contamination of the packaged food product possible in the subsequent phases of handling, transport and/or storage of the packages.

The main object of the present invention is to provide a container made of plastic or paper material, in particular a container of plastic material with a high transparency such as PET and the like or a biodegradable material such as polylactic acid or the like, on which a closing lid may be sealed through the interposition of an adhesive layer without encountering the previously mentioned drawbacks with reference to the prior art.

Another object of the present invention is to provide a container as above described which allows reducing the quantity of adhesive for sealing the closing lid so as to increase its recyclability after consumption.

A further object of the present invention is to provide a method for the production of a container as described above and a method for the production of a package comprising a container as described above and a closing lid applied on the perimetral edge of said container which are simple and economic to manufacture, in particular in terms of reduction of production costs.

### Summary of the invention

These and other objects are primarily achieved by a container for packaging products, in particular food products, the container comprising a bottom, side walls ending at the top with a peripheral edge having a perimetral extension and an adhesive layer, the container being characterized by the fact that said peripheral edge has a step having a perimetral extension formed on its upper surface upwards and said adhesive layer is applied on said step.

In an embodiment, the above step has a substantially bead shape extending perimetral on the upper surface of the above peripheral edge of the container.

In an embodiment, the step of the peripheral edge is made integrally with said peripheral edge. Preferably, the step is spaced apart, in the direction of the width of the peripheral edge, from the internal perimetral end of said peripheral edge (or mouth of the container). Preferably, the step having a perimetral extension whereon the adhesive is applied is made in an area having a substantial central perimetral extension with reference to the direction of the width of the peripheral edge. Embodiments are also provided in the scope of the present invention in which the step of the peripheral edge is off-center in the direction of the width of the peripheral edge, in particular towards the inside or mouth of the container, for instance in case the width of the edge is relatively wide.

In an embodiment, the step has a width that is constant along the entire perimeter of the peripheral edge of the container.

In another embodiment, the container has a square shape (for instance with square or rectangular cross section) and the step has a greater width at corner areas of connection between adjacent sides of the peripheral edge.

Preferably, the step of the peripheral edge of the container has a height comprised between 0.01 mm and 1 mm and a width comprised between 10 mm and 100 mm, in particular between 30 mm and 80 mm.

The container according to the invention may be made of plastic material, of paper material or a combination thereof. In particular, the material forming the container may be a material suitable for food packaging.

In an embodiment, the paper material forming the container may be any material derived from cellulose pulp and having suitable mechanical resistance features, such as for instance cardboard, paperboard, and the like.

In another embodiment, the material forming the container is a plastic material comprising or made of PET, polypropylene (PP) or polystyrene (PS).

In still another embodiment, the container is made of plastic material comprising or consisting of PET. Preferably, PET may be an amorphous PET (APET) or a semi-expanded or expanded PET (XPET). The container may be made in the form of monolayer or multilayer comprising one or more of the above materials.

In another embodiment, the container is made of at least one biodegradable and possibly compostable polymer selected from polylactic acid (PLA), starch-based polyphasic polymers such as for instance materials known under the trade name Mater-bi and combinations thereof. The container may be made in the form of monolayer or multilayer of the above biodegradable polymers.

The above objects are also achieved by a method for the production of a container as above described comprising:
- forming a container for packing products, in particular food products, the container comprising a bottom, side walls ending with a peripheral edge having a perimetral extension and a step having a perimetral extension formed on the upper surface of the peripheral edge (5) upwards,
- applying a heat-activatable adhesive layer on the upper surface of the step of the peripheral edge of the container.

The shaping of the container may be carried out by methods per se known. In particular, in case of containers of plastic material, the container may be formed by thermoforming from a sheet of polymeric material unwound from a reel in which the polymeric sheet is possibly coated on at least one of the surfaces thereof with a non-stick material (for instance silicone) or contains an additive with non-stick properties in the polymer blend to avoid blocking the layers of polymeric sheet wound in reels.

In an embodiment, the method according to the invention further comprises, prior to the adhesive application phase, the phase of subjecting the step of the peripheral edge to a surface treatment on its upper surface to modify the surface tension, so as to improve the adhesion of the adhesive subsequently applied to the edge of the container. Preferably, the surface treatment is selected from a corona-effect treatment, a plasma treatment, a laser treatment, and a mechanical treatment, for instance roughening.

Said surface treatment is optional, but in case of containers of plastic material, it may be preferable, in order to remove from the step of the peripheral edge a layer of non-stick material (for instance silicone) possibly applied on the surface of the polymeric sheet defining the internal surface of the container so as to avoid that the presence of this non-stick material could compromise the correct application of the adhesive on the step of the peripheral edge.

In an embodiment, the application of the adhesive on the upper surface of the step of the peripheral edge is carried out by spreading with a heated roller.

In another embodiment, the application of the adhesive on the upper surface of the step of the peripheral edge is carried out by means of an automated dispensing system (dispenser) of the adhesive, for instance a fixed system with nozzles or a robotic system that is movable along the perimeter of the step of the peripheral edge of the container.

The above objects are also achieved by a method for producing a package comprising:
- providing a container as above described in which an adhesive layer is applied on the upper surface of the step of the peripheral edge;
- placing a product to be packaged into said container;
- joining, preferably by sealing, a closing lid to the peripheral edge of the container by compressing together the closing lid and the peripheral edge of the container and simultaneously activating (melting) the adhesive by applying heat.

Further features and the advantages of the present invention will become clearer from the following description which is provided by way of non-limiting example also with reference to the provided attached drawings.

### Brief description of the drawings

In the attached drawings:
- Figure 1 shows a perspective view of a container according to an embodiment of the invention;
- Figure 2 shows a perspective view of the container of Figure 1 from a different angle;
- Figures 3 and 4 show each a side view of the container of Figure 1;
- Figure 5 shows a perspective view of a container according to another embodiment of the invention;
- Figure 6 shows a top view of the container of Figure 5;
- Figure 7 shows a block diagram of an apparatus for making containers according to the invention.

### Detailed description

In the following present invention, the terms "upper", "lower", "outer" and "inner" refer to the orientation of a particular embodiment as shown in the respective figures.

Moreover, in the present description, it must be understood that the technical features previously and hereinbelow specifically described may be combined with each other in any way, forming further embodiments of the present invention which are not specifically described for reasons of conciseness, but which fall within the scope of the present invention.

In the present description, the term "PET" or "polyethylene terephthalate" indicates a polymeric material essentially consisting of polyethylene terephthalate or comprising polyethylene terephthalate together with a co-monomer. In particular, the PET may be semi-crystalline PET with a crystallinity level greater than 5 and up to 30% or may be amorphous (APET) with a crystallinity level equal to or less than 5% or less. The crystallinity may possibly be reduced with appropriate measures for instance by choosing an appropriate type of PET in relation to the monomer content in the material and minimizing the period of time in which the material can be found in the production process (process of thermoforming) at a temperature in which there is a significant crystallization rate. Alternatively, the PET may be of the semi-expanded or expanded type (XPET).

Preferably, the co-monomer is selected from the group consisting of isophthalic acid (IPA), cyclohexanedimethanol (CHDM) and diethylene glycol.

Moreover, the "PET" for use in the present invention comprises virgin PET (i.e. newly produced directly from a fossil source), recycled PET (r-PET) for instance coming from post-consumption, recyclable PET in particular obtained from thermoforming waste, and combinations thereof.

In the present description, "biodegradable polymer" indicates any polymer having features suitable for use in the production of packaging containers and which, after its working life, may be degraded by microorganisms (bacteria and/or fungi) for instance in water, natural gases, such as carbon dioxide and methane, and/or in biomass. Preferably, the biodegradable polymer for use in the present invention is polylactic acid (PLA). In particular, the biodegradable polymeric material may also be compostable, namely it is a biodegradable polymeric material that in an industrial composting process (55-60°C) disintegrates for at least by 90% in 3 months (EN 13432), decomposing within six months into CO₂, water, and minerals, without releasing toxic substances in the compost. Preferably, a biodegradable and compostable polymer for use in the present invention is a starch-based polyphasic polymer which for instance is a material known under the trade name Mater-bi.

Moreover, the biodegradable material, for instance PLA, may be virgin (i.e. newly produced), recyclable, for instance obtained from thermoforming waste, or a combination thereof.

In the present invention "closing lid" indicates any lid made of plastic or paper material, generally in the form of a film, which may be applied on the edge of the container so as to close the same, in particular in a fluid-tight manner. In particular, the lid may be constituted by a film of thermoplastic material and preferably heat shrinkable applied on the edge of the container by heat sealing. Preferably, the material of the closing lid is the same as that used for the container.

In the present invention, the adhesive can be any heat-activatable polymer-based adhesive, that is, a polymeric adhesive that is solid at room temperature and reaches a fluid state at a higher temperature, in particular by applying heat. In particular, the adhesive has a softening or melting point lower than that of the plastic material of the container so as to be able to heat-seal the closing lid at a temperature that does not deform the container.

Adhesives suitable for use in the present invention may have the following features:
Working temperature (melting in tray) 170 - 200°C;
Softening temperature: > 90°C;
Open time: 1-3 seconds;
Viscosity: 3000-20000 Cp at 180°C.

Examples of adhesives suitable for use in the present invention comprise polyethylene-based adhesive materials (PE), copolymers of PE, terpolymers of PE and mixtures thereof and waxes, for instance petroleum waxes. Preferably, the adhesive comprises copolymers and terpolymers of PE, as well as a wax. This is advantageous both in terms of a suitable melting point of the adhesive and in terms of obtaining a suitable fluid-tight seal when the closing lid or film is applied on the perimetral edge of the container.

Possibly, the adhesive may contain one or more luminescent compounds (luminophores) which advantageously allow detecting the presence and/or position of the adhesive on the step of the peripheral edge of the container with the aid of detection means and processing means so as to check the correct application of the adhesive on said step. Suitable detection means may for instance comprise at least one camera in which one or more luminescence sensors are integrated which receive visible radiation emitted by the luminescent compounds when irradiated by a UV light beam emitted by a suitable source and transmit a signal to the processing means so as to determine the presence and/or position of the applied adhesive.

Moreover, in the case in which the container is made of a biodegradable thermoplastic material such as polylactic acid or the like, the adhesive may advantageously have compatibility features with the material of the container, so as to preserve biodegradability and where possible the compostable nature in accordance with the existing regulations. For instance, the adhesive for this application may also be biodegradable and possibly compostable.

In the present invention, the container may be a single layer (monolayer) or multilayer of plastic material selected from the above mentioned materials and may be obtained in the desired form and dimensions by means of a common thermoforming technique from an extruded sheet of the plastic material.

The single layer or monolayer may consist for instance of a virgin plastic material (such as virgin PET or virgin PLA) or a recyclable plastic material such as r-PET obtained for instance from post-consumption bottles optionally deprived in a conventional manner from impurities that may negatively affect the production process of the container according to the invention and/or the features of the final container.

In the case of multilayer containers, a preferred configuration is a triple-layer container (ABA) in which the outer layer and the inner layer are both made of a virgin plastic material, whereas the middle layer is formed by a mixture consisting of a virgin and recyclable plastic material.

For instance, in case PET is used, an ABA multilayer container may have the outer layer and the inner layer both made of 100% virgin PET, whereas the middle layer may be internally made of r-PET or may be a mixture consisting of virgin PET and r-PET in which the percentage of virgin PET varies from 5% to 40%.

Alternatively, in case PLA is used, an ABA multilayer container may have the outer layer and the inner layer which both consist of 100% virgin PLA, whereas the middle layer is a mixture consisting of 70% virgin PLA and 30% recyclable PLA (i.e., derived from thermoforming waste).

The thermoformed container has a bottom, side walls and a peripheral upper edge, also called sealing edge, the upper side of which forms the surface used for sealing the closing lid by means of the adhesive.

According to the present invention, the peripheral edge has a step having a substantially perimetral extension formed upwards on its upper surface, and on the upper surface of the step an adhesive layer is applied for the sealing with a closing lid.

In an embodiment, the step has a substantially bead shape extending perimetral on the upper surface of the above peripheral edge of the container.

In an embodiment, the step has a substantially constant width along the entire perimeter of the peripheral edge of the container.

In another embodiment, the container has a square shape (for instance with square or rectangular cross section) and the step has a greater width at corner areas of connection between adjacent sides of the peripheral edge.

The step is preferably formed integrally with the peripheral edge of the container, for instance plastically deforming the peripheral edge in a preferably central area thereof and along substantially the entire perimeter of the edge so as to obtain said step. The above deformation of the peripheral edge may advantageously be carried out during the thermoforming inside the thermoforming mold of the container, for instance by modifying the lower part of the mold so as to create a projection or perimetral bead at the formation area of the peripheral edge of the container and the upper part of the mold so as to create a corresponding perimetral recess which, when the mold is closed, is inserted into the projection or perimeter bead of the lower mold.

Prior to applying the adhesive layer, the step of the peripheral edge of the container as above obtained may optionally be subjected to a treatment on its upper surface to improve its adhesion features with the adhesive applied subsequently. Said surface treatment is per se conventional and may be carried out in various ways, for instance through a corona-effect treatment, a plasma treatment, a laser treatment or through mechanical means able to roughen the upper surface of the step of the peripheral edge of the container, for instance by practicing a knurling thereonto.

Said surface treatment is optional but, in case of containers of plastic material, it may be preferable to remove from the step of the peripheral edge a layer of non-stick material (for instance silicone) possibly applied on the surface of the polymeric sheet defining the internal surface of the container so as to avoid that the presence of said non-stick material may compromise the correct application of the adhesive on the step of the peripheral edge.

Afterwards, according to the present invention, an adhesive layer of the above type is applied onto the upper surface of the step of the peripheral edge.

The application of the adhesive may be carried out with any system suitable for creating a thin layer (substantially a veil) on the step of the peripheral edge of the container.

Preferably, the application of the adhesive is carried out by spreading with a heated roller. However, it is possible to use other systems for applying the adhesive. For instance, it is possible to use an automated dispensing system of the adhesive (dispenser) which may be a fixed system with nozzles or a robotic system that is movable along the perimeter of the step of the peripheral edge of the container. Said system may comprise a dispensing unit provided with heating means to heat and maintain the adhesive at a temperature that softens it and allows it to flow from the dispensing unit on the step of the peripheral edge of the container. Alternatively, the application of the adhesive may be carried out by means of the use a matrix having a profile corresponding to that of the step on the peripheral edge of the container.

Advantageously, the adhesive is applied in the form of a thin layer on the upper surface of the step of the peripheral edge along substantially the entire perimeter thereof. Preferably, the adhesive layer is applied in one or more passages, preferably only one passage, in an amount comprised between 4 g/cm² and 10 g/cm², preferably 5-6 g/cm².

It was surprisingly found out that by practicing a step having a perimetral extension, for instance in the form of a bead, on the sealing edge of the container it is possible to apply and confine the adhesive in a simpler and easier manner in a predetermined perimeter area of the sealing edge without compromising the achievement of a good sealing quality between the container and the closing lid when the closing lid is applied to the peripheral edge of the container by heat sealing.

In this way, overflowing and/or dispersion of the adhesive towards the inside of the container is advantageously avoided both during the application of the adhesive onto the peripheral edge of the container and afterwards in the application phase of the closing lid onto the peripheral edge by heat sealing, thus avoiding the possibility of contamination of the product packaged in the final package obtained from the container.

Thanks to the fact that the adhesive is confined to a predetermined area (step) of the sealing edge of the container rather than being spread over the entire edge as in the prior art, a significant and great reduction in the amount of adhesive applied on the edge of the container is also achieved, with consequent reduction in the production costs of the containers according to the invention. The reduction in the amount of adhesive applied on the edge of the container allows the containers according to the invention to have even better transparency features at/close to the edge and recyclability features. Moreover, the adhesive is less visible to the user or final consumer in the containers according to the invention.

It should also be noted that the present invention allows an effective sealing of a closing film on the edge of the container independently of the nature of the material forming the peripheral edge of the container and of the material forming the sealing film, thanks to the interposition of the adhesive layer. According to the materials used, said sealing may advantageously be carried out at lower temperatures (for instance 110-140°C) than those required for a direct heat sealing between the peripheral edge of the container and the closing film (namely without interposition of the adhesive). Moreover, in the present invention, it is not necessary to use a multilayer sealing film provided with a layer of sealing material (for instance polyethylene) and/or to provide a layer of sealing material at least on the peripheral edge of the container.

The present invention is thus applicable to the production of containers that are generally sealed with a closing lid (film), in particular containers of paper material such as cardboard, paperboard and the like, and containers of thermoplastic material. In this regard, it should be noticed that the present invention is also suitable for sealing containers made of a plastic material that cannot be effectively sealed by direct heat sealing with the material of the closing lid, for instance due to the high melting point of the plastic material and/or to the occurrence of deformations or breakage in the peripheral edge during heat sealing, and which therefore require the interposition of an adhesive layer between the peripheral edge and the closing lid or the provision of a layer of sealing material on the closing lid and/or on the peripheral edge to carry out said sealing.

Said monolayer or multilayer containers may be made both of a material such as PET (or comprising PET), which is a plastic material widely used in the packaging field in particular thanks to its good transparency and recyclability features, and of a biodegradable and possibly compostable polymer, such as polylactic acid (PLA) or Mater-bi, which may require the presence of an adhesive layer to perform the sealing between the peripheral edge of the container and the closing lid, if the material of the closing lid were a different material such as PET or other polymers.

In the present invention, the closing lid is made of plastic material which, based on the application and the features required for the final package, may be relatively rigid and stable or may be flexible, for instance in the form of a film.

Materials suitable for the closing lid for use in the present invention may include polypropylene (PP), polyethylene (PE), PET, biodegradable polymers such as polylactic acid (PLA), etc. The closing lid may be made of a single layer of plastic material or of multiple layers (multilayer) comprising a sealing layer made for instance of PE, PP, polystyrene (PS) including oriented polystyrene (OPS), polyamide (PA) and a functional layer. The functional layer of the multilayer structure of the closing lid may be selected in particular from the above plastic materials to impart specific properties such as strength, resilience, gas barrier properties, etc.

The sealing of the closing lid to the sealing edge of the container may be carried out by means of heat-sealing techniques which are per se conventional. In this regard, after placing the product to be packaged inside the container, the closing lid is applied onto the sealing edge of the container and pressure and heat are then applied onto the peripheral edge of the container and onto the closing lid for a time sufficient to achieve the sealing between the closing lid and the sealing edge of the container through the adhesive.

Advantageously, heat sealing may be carried out at a temperature higher than the softening temperature of the adhesive and in any case lower than the softening temperature of the material for instance plastic material of the container so as to activate the adhesive making it softened/ sliding while avoiding deformation of the sealing edge of the container and also achieving energy savings due to the fact that the sealing may be carried out at a lower temperature than that necessary to directly seal the sealing edge of the container and the closing lid (i.e. without interposition of the adhesive) for the same material used for the container and the closing lid.

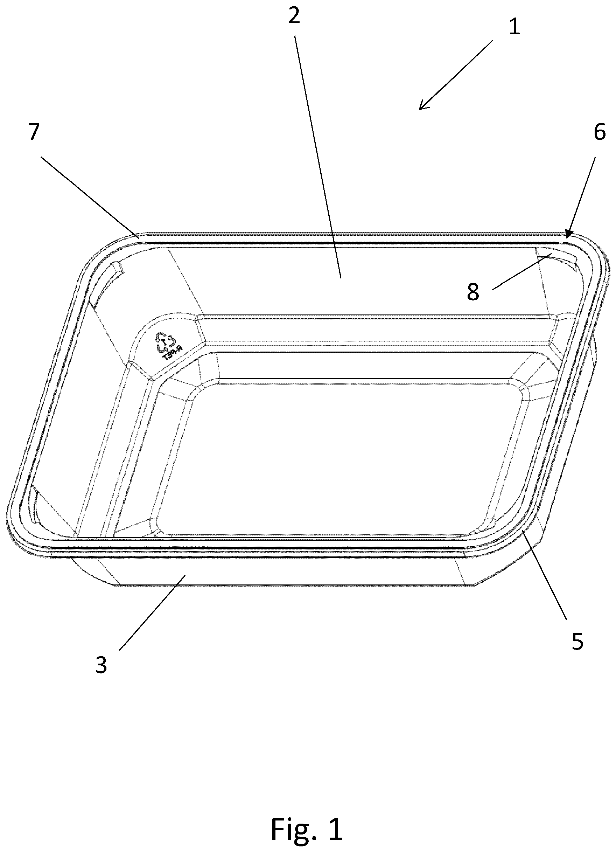

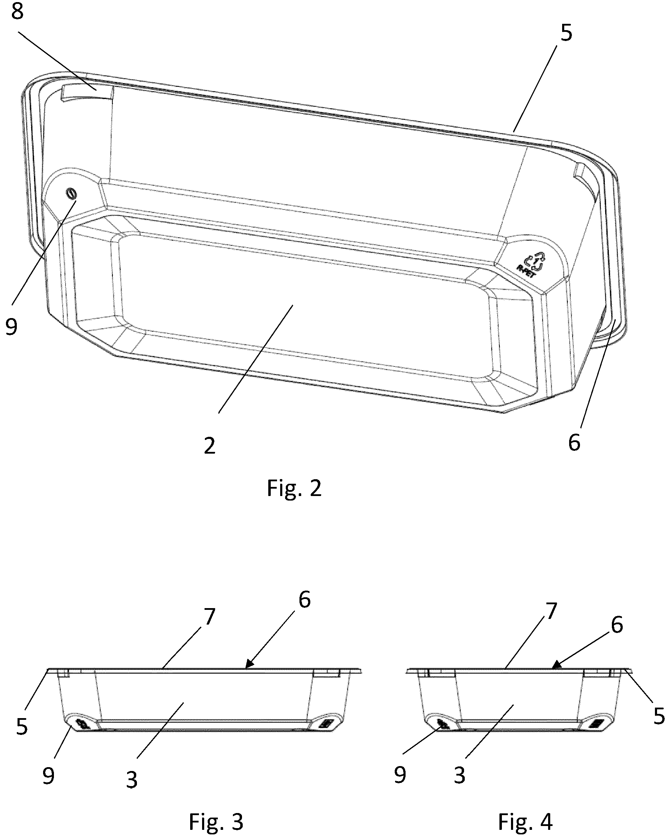

In Figures 1-4 a container according to an embodiment of the present invention is globally indicated with reference number 1.

The container 1 comprises a bottom 2 and side walls 3 which delimit a containment space 4 for a product to be packaged (not shown). The side walls 3 end at the top in a peripheral edge 5 projecting outwards and extending substantially along the entire perimeter of the container 1. According to the present embodiment of the invention, the peripheral edge 5 has a step 6 in the form of a substantially square bead (precisely rectangular) in cross section. The step 6 is obtained integrally, for instance during the thermoforming of the container 1 or afterwards thereto with suitable per se conventional apparatuses and extends along the entire perimeter of the peripheral edge 5, thus defining a sealing upper surface 7. Moreover, the step 6 is spaced apart from the mouth of the container 1 and is arranged in a substantially central area in the direction of the width of the peripheral edge 5 of the container 1.

In the present embodiment, the step 6 has a width that is substantially constant along the entire perimeter of said peripheral edge 5.

Furthermore, the container 1 has an adhesive layer (not shown) applied on the sealing upper surface 7 of the step 6 of the peripheral edge 5.

The container 1 also has at each corner area of connection between adjacent side walls 3, a recess 8 formed on the inner side of the peripheral edge 5 and a beveled wall 9 formed on the outer side of the container 1 close to the bottom 2. This favors the unstacking of the containers 1 stacked together.

The container 1 according to the invention may be used for packing a product, for instance a food product, along with a closing film (not shown) that is seal-joined to the peripheral edge 5 of the container 1 through the adhesive layer applied on the surface 7 of the step 6 by heat sealing.

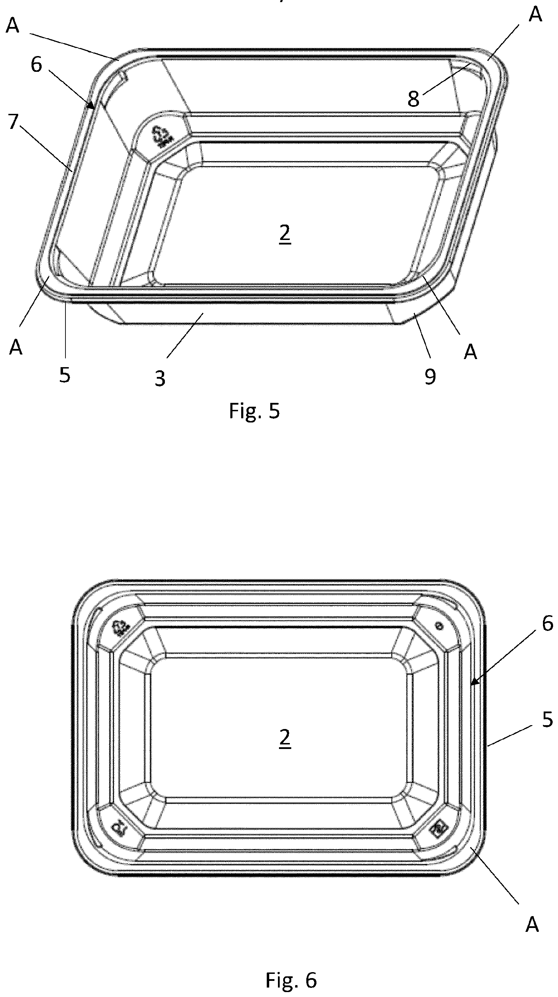

In Figures 5-6 a container according to another embodiment of the invention is shown. Said container differs from the above-described container 1 due to the fact that the step 6 in the form of a bead has a greater width at corner areas A for connection between adjacent sides of the peripheral edge 5. Advantageously this allows having a greater area for joining the closing film through the adhesive in corner areas of the container where the closing film may be subjected to greater stress during the application, for instance in case of heat-shrinkable film. In this way, the greater surface area of the step 6 in the corner areas of the peripheral edge acts as a sort of security for the adhesion of the closing film on the step of the peripheral edge.

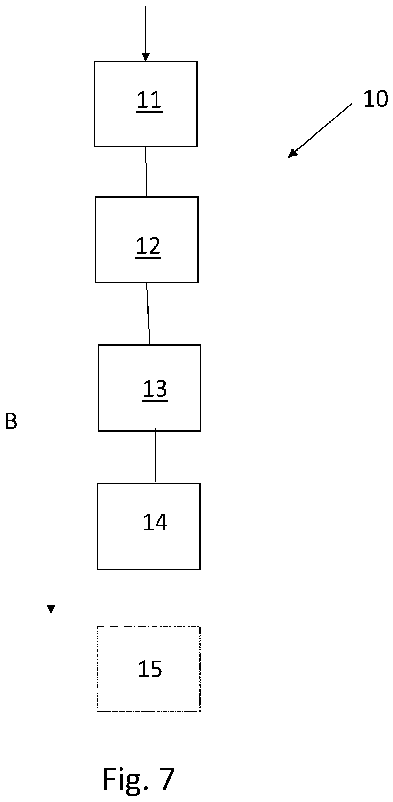

Figure 7 shows a block diagram of an apparatus for making a plurality of containers according to the invention.

The apparatus 10 comprises in series along the forward direction B, an unstacking station 11 for separating single containers from respective groups of containers stacked together, for instance thermoformed containers coming from a thermoforming station and stacked together, an optional surface treatment station 12, an adhesive application station 13, a control station 14 of the applied adhesive and a stacking station 15.

The unstacking station 11 may comprise a preferably automated supply and advancement system on a transport element, for instance a conveyor belt, of one or more groups of stacked containers and an unstacking unit that receives the groups of stacked containers and picks up the single containers from each group. The unstacking unit may be for instance of the motorized slide type that allows picking up the single containers of a group at different preset heights depending on the size (height) of said containers.

The surface treatment station 12 may receive in sequence containers in groups exiting from the unstacking station 11 and moved along the forward direction A. It comprises a unit able to treat the upper surface of the step of the peripheral edge of each container of a group of containers entering the station 12 along substantially the entire perimeter of said edge, so as to improve its adhesion features with the adhesive layer applied in the subsequent station 13. Said unit has structural and functional features which are per se conventional according to the chosen treatment method, for instance it may be a laser, a corona-effect, a plasma treatment unit, or a unit provided with mechanical means able to roughen the upper surface of the step of the peripheral edge of each container, for instance, by practicing a knurling thereon. Advantageously, the surface treatment station may further comprise means (for instance sensors) for determining the position of the single containers of a group of containers that reach an active area inside the station 12, and a command and control unit able to receive and process said positioning data and to control the operation of the treatment unit based on said data. As previously mentioned, the surface treatment station 12 is optional and thus can be omitted.

The adhesive application station 13 receives in sequence the containers in groups exiting from the unstacking station 11 (or from the surface treatment station 12 if provided) and moved along a forward direction A. It may comprise one or more containment masks, each for a respective peripheral edge of a container of a group of containers entering the application station 13, and an adhesive dispensing unit, preferably a hot dispensing unit, in communication with an adhesive application system. The adhesive application system is preferably of the spreading type and may comprise two opposite heated rollers that receive there between a predetermined quantity of adhesive dispensed by the dispensing unit thus softening said adhesive, and a heated spreading roller that receives the softened adhesive between the above rollers and spreads it on the upper surface of the step of the peripheral edge of each container passing below said spreading roller.

The control station 14 receives in sequence the containers in groups exiting from the adhesive application station 13 and is provided with means able to control the correct application of the adhesive layer on the step of the peripheral edge of each container of a group of containers. For instance, in case the adhesive contains one or more luminescent compounds (luminophores), said means may comprise at least one camera in which luminescence sensors may be integrated, and a light source capable of emitting UV rays against the adhesive layer. The beam of reflected light emitted by the luminescent compounds is detected by the at least one camera which transmits a signal to a control unit comprising processing means so as to determine the position and/or presence of the adhesive on the step of the peripheral edge of each container passing through the control station 14.

Finally, the stacking station 15 receives in sequence the containers in groups exiting from the control station 14 whereon the application of the adhesive has been correctly carried out and provides for stacking them in order to form groups of stacked containers suitable for storage and/or transport or to be fed into a packaging line.

It should be noticed that the above described apparatus 10 may be arranged either in line with the container forming apparatus, for instance a thermoforming machine in case of containers of plastic material, so as to create a continuous process or out of line with the latter.

The container and package according to the invention may be subjected to several modifications and variations made by a skilled person, all of these being included within the scope of protection of the attached claims.

## Claims

1. Container (1) for packing products, in particular food products, the container comprising a bottom (2), side walls (3) ending at the top with a peripheral edge (5) having a perimetral extension, and an adhesive layer, the container (1) being **characterized in that** said peripheral edge (5) has a step (6) having a perimetral extension formed upwards on the upper surface thereof and said adhesive layer is applied on said step (6).

2. Container (1) according to claim 1, wherein the container is made of cardboard, paperboard, or the like, or of plastic material.

3. Container (1) according to claim 2, wherein the plastic material comprises or consists of PET, polypropylene (PP), and polystyrene (PS).

4. Container (1) according to claim 3, wherein the plastic material comprises or consists of PET, said PET being selected from an amorphous PET (APET), semi-crystalline PET, or a semi-expanded or expanded PET (XPET).

5. Container (1) according to claim 2, wherein the plastic material comprises or consists of a biodegradable and possibly compostable polymer, said plastic material being preferably polylactic acid (PLA), a starch-based polyphasic polymer known under the trade name Mater-bi, or combinations thereof.

6. Container (1) according to any one of the previous claims, wherein the step (6) of the peripheral edge (5) is made integrally with said peripheral edge (5).

7. Container (1) according to any one of the previous claims, wherein said step (6) is spaced apart, in the direction of the width of the peripheral edge (5), from the internal perimetral end of said peripheral edge (5) and is preferably made in an area having a perimetral extension of said peripheral edge that is central with reference to the direction of the width of the peripheral edge (5).

8. Container (1) according to any one of the previous claims, wherein said step (6) has a width constant along the entire perimeter of said peripheral edge (5).

9. Container (1) according to any one of the previous claims 1 to 7, wherein the container (1) has a square shape and said step (6) has a higher width at corner areas (A) of connection between adjacent sides of said peripheral edge (5).

10. Container (1) according to any one of the previous claims, wherein said step (6) of the peripheral edge (5) has a height comprised between 0.01 mm and 1 mm and a width comprised between 10 mm and 100 mm, preferably between 30 mm and 80 mm.

11. Method for producing a container (1) according to any one of the previous claims, comprising:
- forming a container (1) comprising a bottom (2), side walls (3) ending with a peripheral edge (5) having a perimetral extension and a step (6) having a perimetral extension formed on the upper surface of said peripheral edge (5) upwards,
- applying a heat-activatable adhesive layer on the upper surface (7) of the step (6) of the peripheral edge (5).

12. Method according to claim 11, further comprising, prior to the phase of applying the adhesive, the phase of subjecting the step (6) of said peripheral edge (5) to a surface treatment on the upper surface (7) in order to improve the adhesion features of said upper surface (7), said surface treatment being preferably a corona-effect treatment, a plasma treatment, a laser treatment, or a roughening mechanical treatment such as to practice a knurling.

13. Method according to claim 11 or 12, wherein the application of the adhesive layer on the upper surface (7) of the step (6) is carried out by spreading with a heated roller or by an automated dispensing system of the adhesive which is of the fixed type with nozzle or is of the robotic type movable along the perimeter of the step (6) of the peripheral edge (5).

14. Method according to any one of claims 11 to 13, wherein the adhesive layer is applied in one or more passages, preferably a single passage, in an amount comprised between 4 g/cm² and 10 g/cm², preferably 5-6 g/cm².

15. Method for producing a packaging for packing products, in particular food products, comprising:
- providing a container (1) according to any one of claims 1 to 10;
- placing a product to be packed into said container (1);
- joining, preferably through a seal, a closing lid to the step (6) of the peripheral edge (5) of the container by compressing the closing lid (41) and the peripheral edge (5) of the container together and simultaneously activating the adhesive by applying heat.

## Patentansprüche

1. Behältnis (1) zur Verpackung von Produkten, insbesondere Lebensmittelprodukten, wobei das Behältnis einen Boden (2), Seitenwände (3), die am oberen Ende in einem Umfangsrand (5) mit einer umlaufenden Erstreckung enden, und eine Klebeschicht aufweist, wobei das Behältnis (1) **dadurch gekennzeichnet ist, dass** der Umfangsrand (5) eine auf der oberen Fläche desselben aufragend ausgebildete Stufe (6) mit umlaufender Erstreckung aufweist und die Klebeschicht auf der Stufe (6) aufgebracht ist.

2. Behältnis (1) nach Anspruch 1, bei welchem das Behältnis aus Karton, Pappe oder dergleichen oder aus Kunststoff gebildet ist.

3. Behältnis (1) nach Anspruch 2, bei welchem das Kunststoffmaterial PET, Polypropylen (PP) und Polystyrol (PS) aufweist oder daraus besteht.

4. Behältnis (1) nach Anspruch 3, bei welchem das Kunststoffmaterial PET aufweist oder daraus besteht, wobei das PET aus einem amorphen PET (APET), einem semikristallinen PET, oder einem semi-expandierten oder expandierten PET (XPET) ausgewählt ist.

5. Behältnis (1) nach Anspruch 2, bei welchem das Kunststoffmaterial ein biologisch abbaubares und möglichst kompostierbares Polymer aufweist oder daraus besteht, wobei das Kunststoffmaterial vorzugsweise Polymilchsäure (PLA), ein stärkebasiertes polyphasisches Polymer, das unter der Handelsbezeichnung Materbi bekannt ist, oder Kombinationen derselben ist.

6. Behältnis (1) nach einem der vorangehenden Ansprüche, bei welchem die Stufe (6) des Umfangsrands (5) einstückig mit dem Umfangsrand (5) ausgebildet ist.

7. Behältnis (1) nach einem der vorangehenden Ansprüche, bei welchem die Stufe (6) in Breitenrichtung des Umfangsrands (5) vom inneren umlaufenden Ende des Umfangsrands (5) beabstandet ist und vorzugsweise in einem Bereich ausgebildet ist, der eine umlaufende Erstreckung des Umfangsrands aufweist, die in Bezug auf die Breitenrichtung des Umfangsrands (5) mittig ist.

8. Behältnis (1) nach einem der vorangehenden Ansprüche, bei welchem die Stufe (6) eine konstante Breite entlang des gesamten Umfangs des Umfangsrands (5) aufweist.

9. Behältnis (1) nach einem der vorangehenden Ansprüche 1 bis 7, bei welchem das Behältnis (1) eine quadratische Form aufweist und der Rand (6) in Verbindungs-Eckbereichen (A) zwischen benachbarten Seiten des Umfangsrands (5) eine größere Breite aufweist.

10. Behältnis (1) nach einem der vorangehenden Ansprüche, bei welchem die Stufe (6) des Umfangsrands (5) eine Höhe zwischen 0,01 mm und 1 mm und eine Breite zwischen 10 mm und 100 mm, vorzugsweise zwischen 30 mm und 80 mm, aufweist.

11. Verfahren zur Herstellung eines Behältnisses (1) nach einem der vorangehenden Ansprüche, mit den Schritten:
- Bilden eines Behältnisses (1) mit einem Boden (2), Seitenwänden (3), die in einem Umfangsrand (5) mit einer umlaufenden Erstreckung enden, und einer auf der oberen Fläche des Umfangsrands (5) aufragend ausgebildeten Stufe (6) mit umlaufender Erstreckung;
- Aufbringen einer wärmeaktivierbaren Klebeschicht auf die obere Fläche (7) der Stufe (6) des Umfangsrands (5).

12. Verfahren nach Anspruch 11, welches ferner vor der Phase des Aufbringens des Klebers, die Phase des Behandelns der oberen Fläche (7) der Stufe (6) des Umfangsrands (5) aufweist, um die Hafteigenschaften der oberen Fläche (7) zu verbessern, wobei die Oberflächenbehandlung vorzugsweise eine Coronaeffektbehandlung, eine Plasmabehandlung, eine Laserbehandlung, oder aufrauende mechanische Behandlung ist, um eine Rändelung auszuführen.

13. Verfahren nach Anspruch 11 oder 12, bei welchem das Aufbringen der Klebeschicht auf die obere Fläche (7) der Stufe (6) durch Verteilen mittels einer erwärmten Walze oder mittels eines automatischen Kleber-Ausgabesystems durchgeführt wird, welches vom feststehenden Typ mit einer Düse oder vom robotischen Typ ist, der um den Umfang der Stufe (6) des Umfangsrands (5) bewegbar ist.

14. Verfahren nach einem der Ansprüche 11 bis 13, bei welchem die Klebeschicht in einem oder mehreren Durchgängen, vorzugsweise in einem einzigen Durchgang, in einer Menge zwischen 4 g/cm² und 10 g/cm², vorzugsweise 5-6 g/cm², aufgebracht wird.

15. Verfahren zur Herstellung einer Verpackung zum Verpacken von Produkten, insbesondere Lebensmittelprodukten, mit den Schritten:
- Bereitstellen eines Behältnisses (1) nach einem der Ansprüche 1 bis 10;
- Platzieren eines zu verpackenden Produkts in das Behältnis (1);
- Verbinden, vorzugsweise durch eine Dichtung, eines Verschlussdeckels mit der Stufe (6) des Umfangsrands (5) des Behältnisses durch Zusammendrücken des Verschlussdeckels (41) und des Umfangsrands (5) des Behältnisses und gleichzeitiges Aktivieren des Klebers durch Aufbringen von Wärme.

## Revendications

1. Conteneur (1) pour emballer des produits, notamment des aliments, le conteneur comprenant un fond (2), des parois latérales (3) se terminant en haut avec un bord périphérique (5) ayant une étendue périmétrique et avec une couche adhésive, le contenant (1) étant **caractérisé en ce que** ledit bord périphérique (5) a un étagement (6) ayant une étendue périmétrique formée vers le haut sur la surface supérieure de celui-ci et que ladite couche adhésive est appliquée sur cet étagement (6).

2. Conteneur (1) selon la revendication 1, dans lequel en ce que le conteneur est réalisé en carton, en papier cartonné ou semblable ou en matière plastique.

3. Conteneur (1) selon la revendication 2, dans lequel la matière plastique comprend ou est constituée de PET, polypropylène (PP) et polystyrène (PS).

4. Conteneur (1) selon la revendication 3, dans lequel la matière plastique comprend ou est constituée de PET, ledit PET étant choisie parmi un PET amorphe (APET), un PET semi-cristallin ou un PET semi-expansé ou expansé (XPET).

5. Conteneur (1) selon la revendication 2, dans lequel la matière plastique comprend ou est constituée d'un polymère biodégradable ou éventuellement compostable, ladite matière plastique étant de préférence de l'acide polylactique (PLA), un polymère polyphasique à base de cire, connu sous le nom commercial Materbi, ou des combinaisons de ceux-ci.

6. Conteneur (1) selon l'une des revendications précédentes, dans lequel l'étagement (6) du bord périphérique (5) est réalisé entièrement sur le bord périphérique (5).

7. Conteneur (1) selon l'une des revendications précédentes, dans lequel ledit étagement (6) est espacé, dans la direction de la largeur du bord périphérique (5), de l'extrémité périphérique intérieure et est réalisé de préférence dans une zone ayant une étendue périphérique du bord périphérique qui est centrale par rapport à la direction de la largeur du bord périphérique (5).

8. Conteneur (1) selon l'une des revendications précédentes, dans lequel l'étagement (6) a une largeur constante le long du périmètre entier dudit bord périphérique (5).

9. Conteneur (1) selon l'une des revendications précédentes 1 à 7, dans lequel le conteneur (1) a une forme carrée et ledit étagement (6) a une largeur plus grande dans des zones d'angle (A) de connexion entre des côtés avoisinants dudit bord périphérique (5).

10. Conteneur (1) selon l'une des revendications précédentes, dans lequel l'étagement (6) du bord périphérique (5) a une hauteur comprise entre 0,01 mm et 1 mm et une largeur comprise entre 10 mm et 100 mm, de préférence entre 30 mm et 80 mm.

11. Procédé pour produire un conteneur (1) selon l'une des revendications précédentes, comprenant :
- former un conteneur (1) comprenant un fond (2), des parois latérales (3) se terminant en haut avec un bord périphérique (5) ayant une étendue périphérique et un étagement (6) ayant une étendue périphérique formée sur la surface supérieure du bord périphérique (5) vers le haut,
- appliquer une couche adhésive thermo-activable sur la surface supérieure (7) de l'étagement (6) du bord périphérique (5).

12. Procédé selon la revendication 11, comprenant en outre, avant la phase d'application de l'adhésif, la phase d'exposer l'étagement (6) du bord périphérique (5) à un traitement de surface sur la surface supérieure (7) afin d'améliorer les caractéristiques d'adhésion de la surface supérieure (7), ledit traitement de surface étant de préférence un traitement à effet de corona, un traitement plasma, un traitement laser ou un traitement mécanique de rendre rugueux de type à faire du moletage.

13. Procédé selon la revendication 11 ou 12, dans lequel l'application de la couche adhésive sur la surface supérieure (7) de l'étagement 6) est effectuée en épandant avec un rouleau chauffé ou avec un système de distribution automatisé de l'adhésif, qui est de type fixe ave une buse ou est de type robotique pouvant être déplacé le long du périmètre de l'étagement (6) du bord périphérique (5).

14. Procédé selon l'une des revendications 11 à 13, dans lequel la couche adhésive est appliquée en un ou plusieurs passages, de préférence en un seul passage, avec une quantité comprise entre 4 g/cm² et 10g/m², de préférence de 5 à 6 g/m².

15. Procédé pour produire un conteneur pour emballer des produits, notamment des aliments, comprenant :
- mettre à disposition un conteneur (1) selon l'une des revendications 1 à 10 ;
- placer un produit à emballer dans ledit conteneur (1) ;
- apposer, de préférence par un joint, une lèvre de fermeture à l'étagement (6) du bord périphérique (5) du conteneur en pressant la lèvre de fermeture (41) et le bord périphérique (5) du conteneur ensemble et activer en même temps l'adhésif en appliquant de la chaleur.
